# EUROPÄISCHE PATENTSCHRIFT

(11) **EP 0 923 217 B1**
(45) Veröffentlichungstag und Bekanntmachung des Hinweises auf die Patenterteilung: **31.03.2010**
(21) Anmeldenummer: 98118730.5
(22) Anmeldetag: 05.10.1998
(51) Int. Cl.: H04M 1/72, H04M 1/274

(54) **Funktelefon**
Radiotelephone
Radiotéléphone

(30) Priorität: 07.10.1997 DE 19744225
(43) Veröffentlichungstag der Anmeldung: 16.06.1999
(73) Patentinhaber: IPCom GmbH & Co. KG, 82049 Pullach (DE)
(72) Erfinder: Moeller, Stephan, 30519 Hannover (DE)
(74) Vertreter: Schneider, Günther Martin

(56) Entgegenhaltungen:
- EP-A- 0 491 516
- EP-A- 0 731 590
- EP-A- 0 755 126
- EP-A- 0 776 140
- WO-A-97/04578
- GB-A- 2 306 078
- D2 PRIVAT - MANNESMANN MOBILFUNK: "Bedienungsanleitung D2 Handy 4026" März 1996 (1996-03), Seiten 1-37,
- ULRICHS C; IMMENDOERFER M: "AKUSTISCHE WAEHLHILFE: GEHORCHT AUFS WORT" FUNKSCHAU, Nr. 15, 1986, Seiten 48-50, XP000120720 WEKA FACHZEITSCHRIFTEN VERLAG, POING, DE

## Beschreibung

### Stand der Technik

Die Erfindung geht von einem Funktelefon nach der Gattung des Hauptanspruchs aus. Aus der noch nicht vorveröffentlichten deutschen Patentanmeldung mit dem Aktenzeichen 197 05 636 ist bereits ein Funktelefon bekannt, das einen Telefonbuchspeicher, eine Anzeigevorrichtung und eine alphanumerische Eingabeeinheit umfasst, wobei mittels der Eingabeeinheit eine Nachricht in einem Eingabebetriebsmodus eingebbar und an der Anzeigevorrichtung editierbar ist. Die Eingabe der vollständigen Nachricht wird durch Betätigung einer Schaltfläche zur Bestätigung der Eingabe abgeschlossen, woraufhin ein Betriebsmodus zum Senden der eingegebenen Nachricht eingestellt wird.

Aus der Druckschrift GB 2306078 A ist eine Telefon-Benutzer-Schnittstelle bekannt, die Icons benutzt. Ein Verfahren, das Icons in einer Funkkommunikationsvorrichtung benutzt, die eine Vielzahl von Funkkommunikationsdiensten, wie Funktelefon, Telefax und elektronische Postdienste zur Verfügung stellt, ermöglicht eine effizientere Benutzer-Schnittstelle. Die Vorrichtung umfasst vorzugsweise ein Touchscreen-Display, um funktionale Icons anzuzeigen, die mit Verzeichnisnummern abgespeichert sind, um die Lokalisierung von Informationen und die Übertragung von Nachrichten zu vereinfachen. Insbesondere können die funktionalen Icons, die mit einem der Kommunikationsdienste verknüpft sind, eine einfachere Suche von Verzeichnissen oder eine einfachere Übertragung der Nachrichten ermöglichen, wenn sie in Verbindung mit Verzeichnisnummern abgespeichert sind.

In der Druckschrift "Bedienungsanleitung D2 Handy 4026, mannesmann mobilfunk" ist ein Funktelefon offenbart, bei dem die Zielrufnummer entweder direkt oder mittels Telefonbuch eingegeben wird. Dabei wird zunächst in einem Bereitschaftszustand die Taste "Menü" gedrückt und der Menüpunkt "Meldungen" ausgewählt. Anschließend wird der erscheinende Menüunterpunkt "Text senden" markiert und ausgewählt. Daraufhin erscheint ein neuer Menüpunkt "Neuen Text", der markiert und ausgewählt wird. Anschließend muss die Zielrufnummer eingegeben oder die Telefonbuchtaste gedrückt werden. Wird die Telefonbuchtaste gedrückt, so wird eine Rufnummer aus dem Telefonbuch ausgewählt und eingefügt. Anschließend wird die Taste "OK" gedrückt. Anschließend kann der gewünschte zu sendende Text wie im Telefonbuch eingegeben werden. Nach Eingabe des Textes wird die Taste "»" wiederholt gedrückt. Darauf folgt die Frage "Eingabe zu Ende?". Daraufhin wird die Taste "OK" gedrückt. Anschließend wird die Taste "Senden" gedrückt und die eingegebene Nachricht gesendet.

Die Druckschrift "C. Ulrichs & M. Immendörfer, Akustische Wählhilfe: Gehorcht aufs Wort, Funkschau, Nr. 15, 1986, Seiten 48-50, XP0001207210 WEKA FACHZEITSCHRIFTEN VERLAG, POING, DE" offenbart ein sprachgesteuertes Telefon. Es erkennt das Sprachmuster des Sprechenden, zeigt Namen und Rufnummer des gewünschten Gesprächspartners auf einem Display an und löst die Rufnummernwahl automatisch aus. Alternativ kann die Wahl von im Telefon gespeicherten Rufnummern durch Eintippen der maximal ersten vier Buchstaben eines Namens erfolgen.

### Vorteile der Erfindung

Das erfindungsgemäße Funktelefon mit den Merkmalen des Hauptanspruchs hat demgegenüber den Vorteil, dass in dem Sendebetriebsmodus mittels der Eingabeeinheit ein Name eingebbar ist und bei Übereinstimmung des eingegebenen Namens mit einem Eintrag des Telefonbuchspeichers eine automatische Anwahl einer Rufnummer eines unter diesem Namen abgespeicherten Teilnehmers erfolgt. Auf diese Weise muß der Benutzer, der in jedem Fall den Namen des zu rufenden Teilnehmers, jedoch nicht unbedingt dessen Rufnummer kennt, nicht in einem Telefonbuchbetriebsmodus die dem zu rufenden Teilnehmer zugeordnete Rufnummer aus dem dann an der Anzeigevorrichtung zur Anzeige gebrachten Telefonbuchspeicher entnehmen, so daß die Bedienung für den Benutzer erheblich vereinfacht und beschleunigt wird. Besonders vorteilhaft ist es, daß in dem Sendebetriebsmodus eine Aufforderung an der Anzeigevorrichtung erscheint, wonach entweder eine Rufnummer oder ein Name mittels der Eingabeeinheit eingegeben werden soll und daß eine Auswerteeinheit vorgesehen ist, die bei Detektion eines eingegebenen Namens den Vergleich dieses Namens mit den Einträgen des Telefonbuchspeichers veranlaßt und die bei Detektion einer eingegebenen Rufnummer eine Anwahl dieser Rufnummer veranlaßt. Auf diese Weise wird der Bedienkomfort für den Benutzer erheblich erhöht, da er je nach Wunsch Name oder Rufnummer des zu rufenden Teilnehmers eingeben kann, wobei das Funktelefon automatisch zwischen einer eingegebenen Rufnummer und einem eingegebenen Namen unterscheiden kann. Der Benutzer ist außerdem nicht auf die Eingabe des Namens des zu rufenden Teilnehmers festgelegt und spart dadurch vor allem für den Fall, daß der Name nicht im Telefonbuchspeicher abgespeichert ist, Zeit, indem er gleich die gegebenenfalls anderweitig ermittelte Rufnummer des zu rufenden Teilnehmers mittels der Eingabeeinheit eingibt.

### Zeichnung

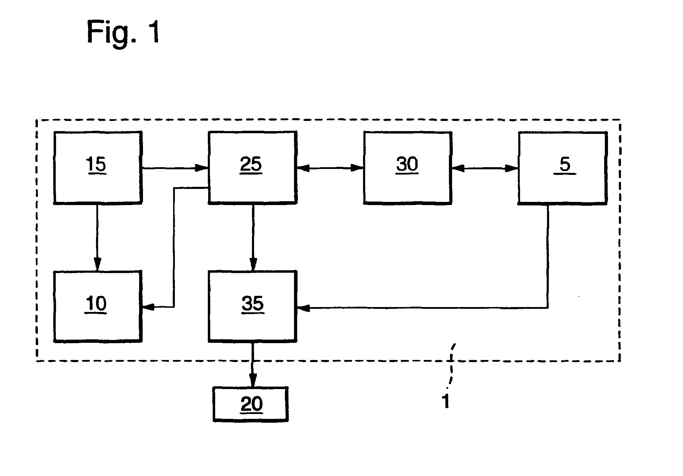

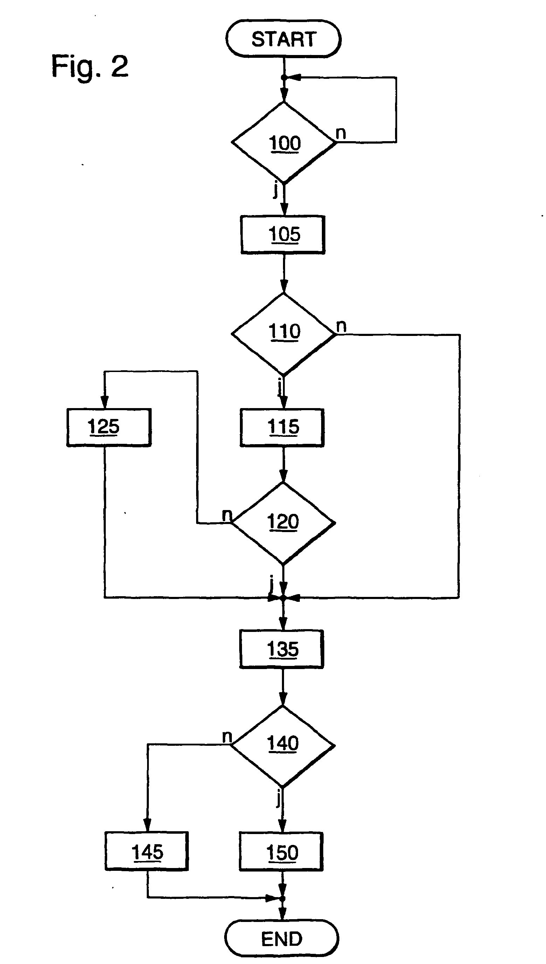

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Funkgerätes und Figur 2 einen Ablaufplan für die Funktionsweise des erfindungsgemäßen Funkgerätes.

### Beschreibung des Ausführungsbeispiels

In Figur 1 kennzeichnet 1 ein beispielsweise als Mobil- oder Schnurlostelefon ausgebildetes Funktelefon, das als Blockschaltbild mit den für die Erfindung wesentlichen Blöcken dargestellt ist. Das Funktelefon 1 umfaßt eine alphanumerische Eingabeeinheit 15, die an eine Anzeigevorrichtung 10 und eine Auswerteeinheit 25 angeschlossen ist. Die Anzeigevorrichtung 10 ist ebenfalls an die Auswerteeinheit 25 angeschlossen. Ein Telefonbuchspeicher 5 ist über einen Vergleicher 30 ebenfalls an die Auswerteeinheit 25 angeschlossen. Die Auswerteeinheit 25 und der Telefonbuchspeicher 5 sind zusätzlich über eine Netzanschlußeinheit 35 mit integrierter Wählvorrichtung an ein Telekommunikationsnetz 20 angeschlossen.

In einem Eingabebetriebsmodus ist mittels der alphanumerischen Eingabeeinheit 15 ein Text eingebbar und an der Anzeigevorrichtung 10 editierbar. Nach Beendigung der Texteingabe an der Eingabeeinheit 15 kann der Eingabebetriebsmodus beispielsweise durch Betätigen einer Bestätigungstaste an der Eingabeeinheit 15 beendet werden. Die Auswerteeinheit 25 erkennt diese Betätigung der Bestätigungstaste an der Eingabeeinheit 15 und schaltet das Funktelefon 1 in einen Sendebetriebsmodus um. In dem Sendebetriebsmodus veranlaßt die Auswerteeinheit die Netzanschlußeinheit 35 mit der Wählvorrichtung zur Anwahl der Rufnummer eines an das Telekommunikationsnetz 20 angeschlossenen Teilnehmers, an den der mittels der Eingabeeinheit eingegebene Text gesendet werden soll. Bei erfolgreichem Verbindungsaufbau wird dann der eingegebene und gegebenenfalls in einem in Figur 1 nicht dargestellten Speicher zwischengespeicherte Text über die Netzanschlußeinheit 35 und das Telekommunikationsnetz 20 an den zu rufenden Teilnehmer übertragen.

Im Telefonbuchspeicher 5 sind Namen von Teilnehmern abgespeichert, denen jeweils eine Rufnummer zugeordnet ist, wobei die zugeordneten Rufnummern ebenfalls im Telefonbuchspeicher 5 abgespeichert sind.

Im folgenden wird anhand von Figur 2 die Funktionsweise des Funktelefons 1 zum Absenden eines in einem Eingabebetriebsmodus eingegebenen Textes an einen zu rufenden Teilnehmer mittels eines Ablaufplans beschrieben. Bei einem Programmpunkt 100 wird geprüft, ob an der Eingabeeinheit 15 die Bestätigungstaste zur Beendigung des Eingabebetriebsmodus betätigt wurde. Ist dies der Fall, so wird zu Programmpunkt 105 verzweigt, andernfalls wird zu Programmpunkt 100 zurückverzweigt. Bei Programmpunkt 105 schaltet die Auswerteeinheit 25 das Funktelefon 1 in den Sendebetriebsmodus um und bringt an der Anzeigevorrichtung 10 eine Eingabeaufforderung zur Darstellung, die den Benutzer zur Eingabe entweder einer Rufnummer oder eines Namens mittels der Eingabeeinheit 15 auffordert. Eine entsprechende Eingabe des Benutzers wird beispielsweise wiederum durch Betätigung der Bestätigungstaste an der Eingabeeinheit 15 der Auswerteeinheit 25 signalisiert, die daraufhin bei Programmpunkt 110 prüft, ob ein Name, d.h. keine reine Zahlenkette eingegeben wurde. Ist dies der Fall, so wird zu Programmpunkt 115 verzweigt, andernfalls wird zu Programmpunkt 135 verzweigt. Bei Programmpunkt 115 veranlaßt die Auswerteeinheit 25 den Vergleicher 30 zum Vergleich des eingegebenen Namens mit den Einträgen im Telefonbuchspeicher 5. Anschließend wird bei Programmpunkt 120 geprüft, ob der eingegebene Name mit einem Eintrag im Telefonbuchspeicher 5 übereinstimmt. Ist dies der Fall, so wird zu Programmpunkt 135 verzweigt, andernfalls wird zu Programmpunkt 125 verzweigt. Bei Programmpunkt 125 veranlaßt die Auswerteeinheit 25 die Anzeigevorrichtung 10 zur Darstellung einer Aufforderung an den Benutzer, mittels der Eingabeeinheit 15 eine Rufnummer einzugeben. Die Eingabe einer Rufnummer wird vom Benutzer ebenfalls durch Betätigung der Bestätigungstaste an der Eingabeeinheit 15 abgeschlossen. Anschließend wird zu Programmpunkt 135 verzweigt. Bei Programmpunkt 135 veranlaßt die Auswerteeinheit 25 die in der Netzanschlußeinheit 35 integrierte Wählvorrichtung zur Anwahl der entweder vom Benutzer an der Eingabeeinheit 15 eingegebenen oder aus dem Telefonbuchspeicher 5 entnommenen, dem eingegebenen Namen zugeordneten Rufnummer des zu rufenden Teilnehmers. Anschließend wird zu Programmpunkt 140 verzweigt. Bei Programmpunkt 140 prüft die Netzanschlußeinheit 35, ob eine Verbindung zum gerufenen Teilnehmer erfolgreich aufgebaut wurde. Ist dies der Fall, so wird zu Programmpunkt 150 verzweigt, andernfalls wird zu Programmpunkt 145 verzweigt. Bei Programmpunkt 150 wird der gegebenenfalls in dem in Figur 1 nicht dargestellten Speicher zwischengespeicherte, im Eingabebetriebsmodus eingegebene Text über das Telekommunikationsnetz 20 an den gerufenen Teilnehmer gesendet. Anschließend wird der Programmteil verlassen. Bei Programmpunkt 145 wird der Verbindungsaufbau abgebrochen und gegebenenfalls zu einem späteren Zeitpunkt mittels automatischer Wahlwiederholung erneut eingeleitet, wobei der eingegebene Text so lange in dem in Figur 1 nicht dargestellten Speicher zwischengespeichert bleibt, bis im Eingabebetriebsmodus ein neuer Text eingegeben wird. Nach Programmpunkt 145 wird der Programmteil ebenfalls verlassen.

Ein mittels der Eingabeeinheit 15 eingegebener Name oder eine eingegebene Rufnummer werden ebenfalls an der Anzeigevorrichtung 10 dargestellt und können beispielsweise mit Hilfe von Cursortasten bis zur Bestätigung mittels der Bestätigungstaste noch korrigiert werden.

Bei Ausbildung des Funktelefons 1 als Mobiltelefon, beispielsweise nach dem GSM-Standard (Global System for Mobile Communication) erfolgt das Absenden des Textes als Textnachricht bzw. als SMS-Nachricht (Short Message Service).

## Patentansprüche

1. Funktelefon (1), insbesondere Mobil- oder Schnurlostelefon, mit einem Telefonbuchspeicher (5), einer Anzeigevorrichtung (10) und einer alphanumerischen Eingabeeinheit (15), wobei in einem Sendebetriebsmodus mittels der Eingabeeinheit (15) ein Name oder eine Rufnummer eingebbar ist, wobei eine Auswerteeinheit (25) vorgesehen ist, die bei Detektion eines eingegebenen Namen den Vergleich dieses Namens mit den Einträgen des Telefonbuchspeichers (5) veranlasst, wobei bei Übereinstimmung des eingegebenen Namens mit einem Eintrag des Telefonbuchspeichers (5) eine automatische Anwahl einer Rufnummer eines unter diesem Namen abgespeicherten Teilnehmers erfolgt und wobei die Auswerteeinheit bei Detektion einer eingegebenen Rufnummer eine Anwahl dieser Rufnummer veranlasst, wobei die Auswerteeinheit (25) automatisch zwischen einer eingegebenen Rufnummer und einem eingegebenen Namen unterscheidet, und
wobei für den Fall, in dem der eingegebene Name mit keinem der Einträge des Telefonbuchspeichers (5) übereinstimmt, an der Anzeigevorrichtung (10) eine Aufforderung zur Eingabe einer Rufnummer erscheint.

## Claims

1. Radiotelephone (1), in particular mobile or cordless telephone, with a telephone book memory (5), a display device (10) and an alphanumeric input unit (15), wherein in a transmission operation mode by means of the input unit (15) a name or a telephone number can be inputted, wherein an evaluation unit (25) is provided, which in case of detection of an inputted name initiates the comparison of this name with the entries of the telephone book memory (5), wherein in case of match of the inputted name with an entry of the telephone book memory (5), an automatic dial of a telephone number of a subscriber stored under this name is done, and wherein the evaluation unit in case of detection of an inputted telephone number initiates a selection of this telephone number, wherein the evaluation unit (25) distinguishes automatically between an inputted telephone number and an inputted name, and
wherein the case in which the inputted name does not match with any of the entries of the telephone book memory (5), on the display device (10) a prompt for inputting a telephone number appears.

## Revendications

1. Radiotéléphone (1), en particulier téléphone mobile ou sans fil, comprenant une mémoire d'annuaire téléphonique (5), un écran (10) et une unité de saisie alphanumérique (15), où dans un mode de transmission on peut entrer un nom ou un numéro de téléphone au moyen de l'unité de saisie (15), où une unité d'évaluation (25) est prévue, laquelle en cas de détection d'un nom entré entraîne la comparaison de ce nom avec les entrées de la mémoire d'annuaire téléphonique (5), où en cas de concordance du nom entré avec une entrée de la mémoire d'annuaire téléphonique (5) se produit une composition automatique d'un numéro de téléphone d'un participant sauvegardé sous ce nom, et où l'unité d'évaluation en cas de détection d'un numéro de téléphone entré entraîne une composition de ce numéro de téléphone, l'unité d'évaluation (25) distinguant automatiquement entre un numéro de téléphone entré et un nom entré, et
où pour le cas où le nom entré ne correspond à aucune des entrées de la mémoire d'annuaire téléphonique (5), sur l'écran (10) apparaît une invitation à entrer un numéro de téléphone.
